# EUROPEAN PATENT SPECIFICATION

(11) **EP 3 141 324 B1**
(45) Date of publication and mention of the grant of the patent: **25.12.2019**
(21) Application number: 16183403.1
(22) Date of filing: 09.08.2016
(51) Int. Cl.: B23B 29/02, B23B 29/034

(54) **PORTABLE MACHINE TOOL COMPRISING A ROTARY TOOL HOLDER HEAD**
TRAGBARE WERKZEUGMASCHINE MIT ROTIERBAREM WERKZEUGHALTERKOPF
MACHINE-OUTIL AVEC TÊTE PORTE-OUTIL ROTATIVE

(30) Priority: 11.09.2015 IT UB201568360 U
(43) Date of publication of application: 15.03.2017
(73) Proprietor: SIR MECCANICA S.p.A., 88100 Catanzaro (IT)
(72) Inventor: SIRACUSA, Rinaldo, 88100 CATANZARO (IT)
(74) Representative: Casadei, Giovanni

(56) References cited:
- EP-A1- 2 644 301
- EP-A1- 2 711 497
- JP-A- S 614 605
- JP-A- S61 173 803
- JP-A- 2014 124 756
- US-A- 1 953 402
- US-A- 3 110 200
- US-A- 6 053 082

## Description

This invention relates to a portable machine tool according to the preamble of claim 1. An example of such a machine tool is known from document EP 2 644 301 A1.

Portable machine tools are known to be used for machining mechanical parts which are immovable or difficult to transport or also mechanical parts which are difficult to access with a traditional machine tool. In these and other cases there is therefore the need to provide, for example, portable drilling machines, which can be easily adapted to the particular needs which arise each time.

If, therefore, the portable machine tools are necessarily adaptable to a wide range of situations which can arise, the same cannot be said for the tool holder heads installed on them, which are of a substantially traditional type.

The traditional tool holder heads, precisely because they suited to ordinary types of machining, are sometimes not very adaptable to the particular and often abnormal situations in which the portable machine tools are normally used.

In this regard, a drawback linked to the use of traditional tool holder heads is the difficulty of adjusting the machining tool and, in particular, its feeding in a radial direction.

Document EP 2 644 301 A1, in the name of the same applicant, discloses a portable machine tool of known type.

The aim of this invention is to provide a portable machine tool comprising a tool holder head which is free of the above-mentioned drawbacks.

More specifically, the aim of this invention is to provide a portable machine tool comprising which is efficient in its operation and easy and practical to use.

A further aim of this invention is to provide a portable machine tool comprising a tool holder head which allows fast and precise operations for adjusting the position of the machine tool.

The above-mentioned aims are achieved by a portable machine tool according to claim 1.

Further advantages of this invention are more apparent in the non-limiting description below, with reference to a preferred, non-limiting, embodiment of a portable machine tool comprising a tool holder head as illustrated in the accompanying drawings, in which:
- Figure 1 is a schematic perspective view of a preferred embodiment of the portable machine tool according to this invention, comprising a tool holder head assembled on a respective shaft of the portable machine tool;
- Figure 2 is a schematic perspective view of the tool holder head of Figure 1 in a configuration disassembled from the shaft of the machine tool;

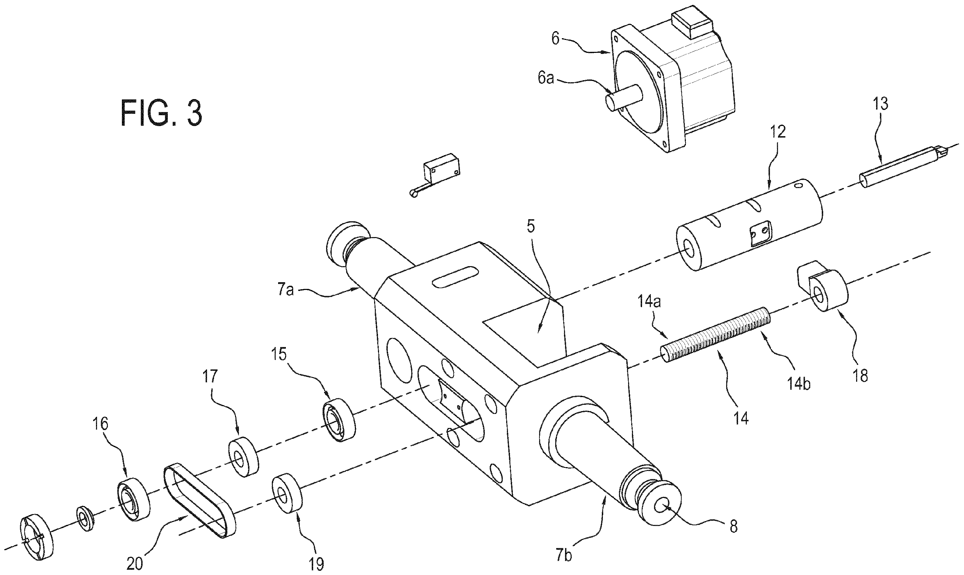

- Figure 3 is an exploded view of the tool holder head according to the previous drawings;
- Figure 4 is a schematic perspective view, with some parts cut in cross section to better illustrate others, of the tool holder head according to the previous drawings;
- Figure 5 is a schematic perspective view of a variant embodiment of the machine tool according to this invention.

As illustrated in the accompanying drawings, the reference numeral 1 denotes in its entirety a tool holder head of a portable machine tool according to this invention.

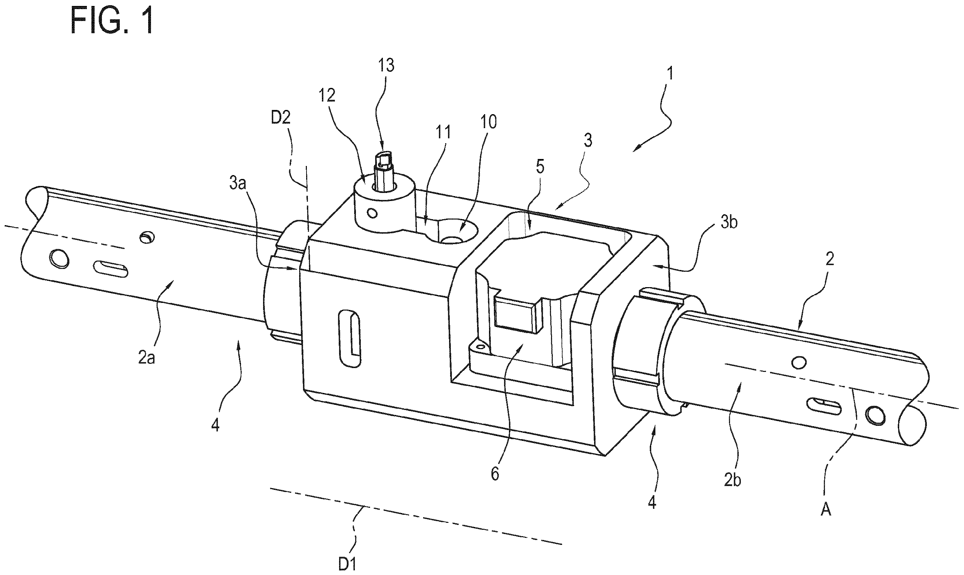

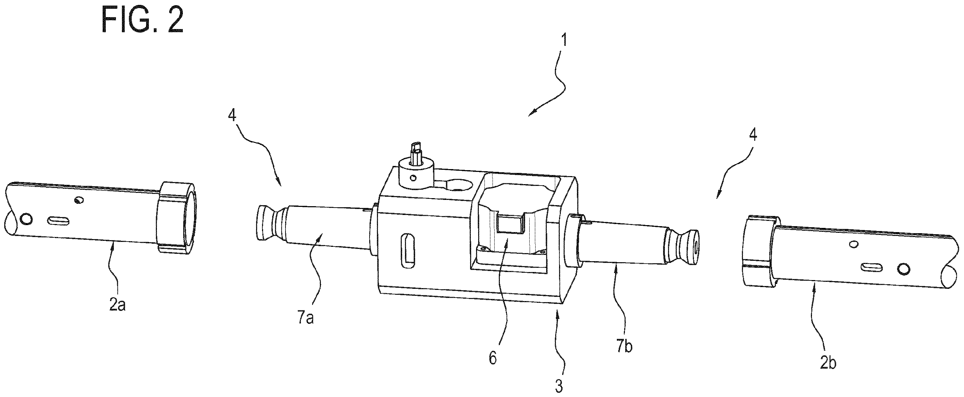

The portable machine tool has a rotary shaft 2, shown in Figures 1 and 2, driven by respective motor means (not illustrated), the tool holder head 1 being mounted on the shaft 2.

The rotary shaft 2 has a relative axis of rotation A.

As illustrated in the accompanying drawings, the head 1 comprises a central body 3 and means 4 for connecting the central body 3 to the rotary shaft 2 of the machine tool.

The central body 3 has a parallelepiped shape advantageously having a main extension in a direction D1 which, when the head 1 is assembled on the rotary shaft 2, is parallel to the axis A of rotation of the latter.

A chamber 5 is made in the central body 3 for housing an electric motor 6.

The connecting means 4 comprise two conical pins 7a, 7b emerging from walls 3a, 3b opposite the central body 3.

The conical pins 7a, 7b are coaxial to each other and are designed to be stably coupled to respective ends of two portions 2a, 2b of the rotary shaft 2.

The portions 2a, 2b of the rotary shaft constitute half-shafts.

These ends of the portions 2a, 2b have, for this purpose, respective conical cavities, not illustrated in detail in the accompanying drawings, each designed to house the pins 7a, 7b.

Each conical pin 7a, 7b defines with the respective cavity a relative male-female coupling.

The pins 7a, 7b have machined ends to contribute to the locking inside the respective cavity, by shape impediment.

In short, the head 1 is interposed between the two separate portions 2a, 2b, physically disconnected, of the shaft 2 and it is precisely this head 1 which restores the mechanical continuity of the shaft 2.

Inside the conical pin 7b there is a through hole 8 leading into the chamber 5 and designed for the passage of cables, not illustrated, for powering and controlling the electric motor 6.

Advantageously, the electric motor 6 is a stepping motor type, which can be effectively and easily controlled electronically.

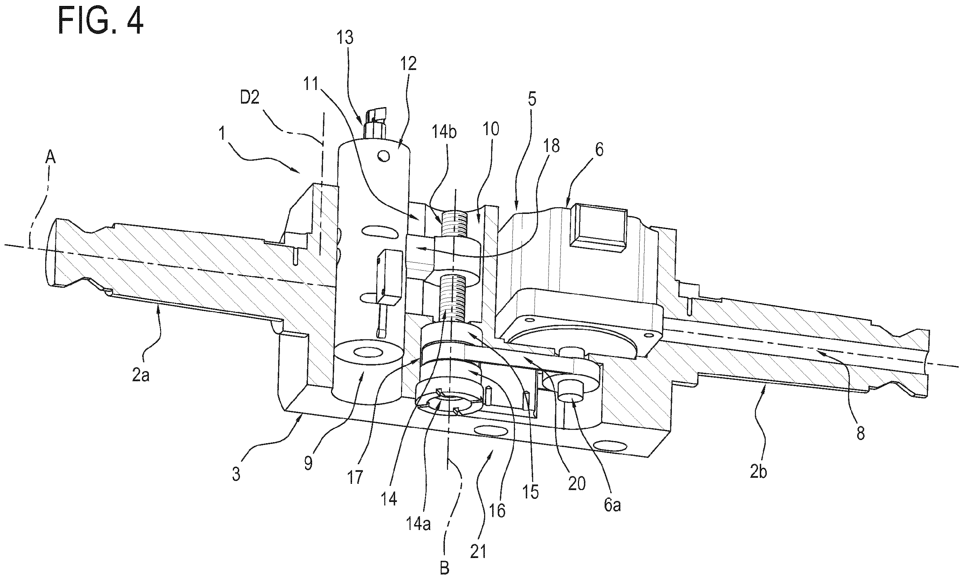

As clearly illustrated in Figure 4, on the central body 3 there are a first cavity 9, a second cavity 10 and a compartment 11 for connecting between the first and second cavity 9, 10.

The first and the second cavity 9, 10 extend longitudinally parallel to each other.

The second cavity 10 has a cylindrical shape.

Advantageously, but not necessarily, the first cavity 9 also has a cylindrical shape.

The head 1 comprises a slide 12 for supporting a machine tool 13, the slide 12 being housed slidably inside the above-mentioned first cavity 9 made in the central body 3.

According to the preferred embodiment illustrated in the accompanying drawings, the slide 12 is cylindrical in shape and has a hole housing the tool 13.

As illustrated in Figure 4, the head 1 comprises, housed rotatably inside the second cylindrical cavity 10, an operating shaft 14.

At a relative lower portion 14a, the operating shaft 14 is mounted on two respective bearings 15, 16 designed to allow the rotation of the shaft about a relative central axis B, inside the cavity.

The two bearings 15, 16 are axially spaced and between them is housed a pulley 17 keyed on the shaft 14.

The operating shaft 14 also has an upper portion 14b threaded externally.

Again with reference to Figure 4, the tool holder head 1 comprises a bracket 18 connected rigidly to the slide 12 supporting the tool.

The bracket 18 comprises a first portion housed inside the second cavity 10 and having a hole threaded internally engaging by screwing with the above-mentioned upper threaded portion 14b of the operating shaft 14.

The operating shaft 14 and the bracket 18 define a screw-nut coupling.

The bracket 18, in its connecting portion to the slide 12 is housed slidably inside the above-mentioned compartment 11 for connection between the first and the second cavity 9, 10.

In other words, the connecting compartment 11 is designed to allow the sliding of the bracket 18 along a direction D2 transversal to the axis A of the shaft and substantially parallel to the axis B of the shaft 14.

As illustrated in Figure 4, the motor 6 has a respective shaft 6a on which is fitted a respective drive pulley 19.

The drive pulley 19 and driven pulley 17 are operatively connected by a belt 20 as the motion flexible transmission element.

The above-mentioned operating shaft 14 and bracket 18, defining the above-mentioned screw-nut coupling, together with the above-mentioned pulley 17, pulley 19 and belt 20 define, in their entirety, means 21 for transmitting motion from the electric motor 6 to the supporting slide 12, designed to generate a linear movement of the slide 12 and of the tool 13 connected to it, along the direction D2 transversal to the axis of rotation A of the shaft 2 of the machine tool.

In use, the rotation of the drive pulley 19 by means of the motor 6 generates a corresponding rotation of the driven pulley 17 which is integral with the operating shaft 14 and, consequently, of the latter about the relative axis B.

Thanks to the screw-nut coupling defined between the operating shaft 14 and the bracket 18, the latter, following a rotation of the shaft 14, translates along the above-mentioned direction parallel to the axis B pulling with it the tool holder slide 12, which is slidable inside the first cavity 9.

The translational movement of the slide 12 thus modifies the position of the tool 13 as a function of the desired machining.

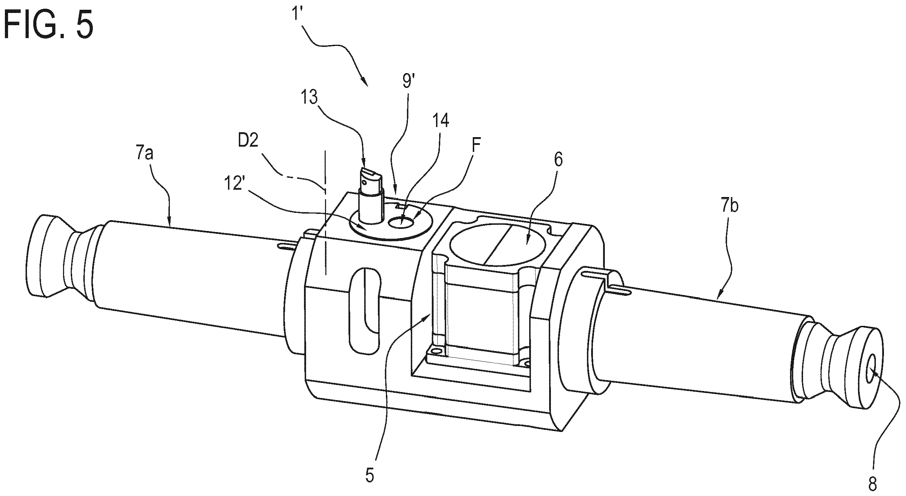

Figure 5 illustrates a variant embodiment of the machine tool according to this invention, with a variant of a tool holder head for reasons of practicality denoted by the reference numeral 1'.

Basically, the head 1' differs from the head 1 described above in that the bracket and the supporting slide of the tool 13 are made as a single body, labelled 12' in Figure 5.

In this way, the nut element of the screw-nut coupling consists of a threaded hole F formed directly in the slide 12' and the operating shaft 14 engages by screwing in the threaded hole.

In light of the above-mentioned variant, the head 1' has a single cavity 9', designed for housing the slide 12', not necessitating further compartments or housing cavities, nor operating shaft, nor bracket (no longer present).

Further components of the tool holder head 1' not mentioned or specifically described are to be considered substantially coincident with those described above with reference to the tool holder head 1 according to the first embodiment.

A shape impediment to the rotation is provided for guiding the translation of the slide 12' along the direction D2.

The tool holder head 1, 1' allows the tool 13 to be moved along an axis which is radial relative to the rotation of the shaft 2 of the machine tool.

In short, in the internal reaming or turning operations the tool holder head 1,1' allows an effective and optimum control of the radial feed motion of the tool 13, without this requiring any manual operation on the head by the operator.

The machine tool according to this invention with a respective tool holder head 1,1' is therefore advantageously used with automatic control.

## Claims

1. A portable machine tool, comprising a rotary shaft (2), motor means for rotating the shaft (2) about a respective axis, and a rotary tool holder head (1), said rotary tool holder head (1) comprising:
- a central body (3),
- connecting means (4) for connecting the central body (3) to said rotary shaft (2),
- a slide (12; 12') for supporting a machine tool (13), slidably housed in a respective first cavity (9; 9') made in the central body (3),
- an electric motor (6) housed in the central body (3),
- means (21) for transmitting motion from the electric motor (6) to the supporting slide (12; 12'), configured to generate a linear movement of the slide (12; 12') inside the first cavity (9; 9'), in a predetermined direction (D2) transversal to the axis (A) of rotation of the shaft of the machine tool **characterised in that** the rotary shaft (2) comprises two half-shafts (2a, 2b) positioned aligned with each other, with the rotary tool holder head (1) being interposed between said rotary half-shafts (2a, 2b) and **in that** the connecting means (4) comprise respective male-female couplings between the rotary tool holder head (1) and the two half-shaft (2a, 2b).

2. The portable machine tool according to claim 1, **characterised in that** the means (21) for transmitting motion comprise a screw-nut coupling.

3. The portable machine tool according to claim 2, **characterised in that** the means (21) for transmitting motion comprise an operating shaft (14) defining, with a relative portion (14b) which is threaded externally, the screw of the screw-nut coupling, and a bracket (18), connected rigidly to the slide (12) supporting the tool (13) and defining, with a relative hole threaded internally, the nut of the screw-nut coupling, the threaded portion (14b) of the operating shaft (14) engaging by screwing inside the threaded hole.

4. The portable machine tool according to claim 3, **characterised in that** in the central body (3) a second cavity (10) is made for housing the operating shaft (14), the second cavity (10) extending longitudinally parallel to the first cavity (9).

5. The portable machine tool according to claim 4, **characterised in that** in the central body (3) a compartment (11) is made for connecting between the first and second cavity (9, 10), the compartment (11) being designed to allow the sliding of the bracket (18) in its connecting portion to the slide (12).

6. The portable machine tool according to claim 2, **characterised in that** the means (21) for transmitting motion comprise an operating shaft (14) defining, with a relative portion (14b) which is threaded externally, the screw of the screw-nut coupling, the nut of the screw-nut coupling being defined by a hole (F) at least partially threaded made in the slide (12'), the threaded portion (14b) of the operating shaft (14) engaging by screwing inside the threaded hole.

7. The portable machine tool according to any one of claims 3 to 6, **characterised in that** the means (21) for transmitting motion comprise a driven pulley (17) made on the operating shaft (14) and an element (20) for flexible transmission of the motion designed to operatively connect the pulley (17) to a shaft (6a) of the electric motor (6).

## Patentansprüche

1. Tragbare Werkzeugmaschine, umfassend eine Rotationswelle (2), Antriebsmittel zum Drehen der Welle (2) um eine jeweilige Achse und einen rotierbaren Werkzeughalterkopf (1), wobei der rotierbare Werkzeughalterkopf (1) Folgendes umfasst:
- einen mittigen Körper (3);
- Verbindungsmittel (4) zum Verbinden des mittigen Körpers (3) mit der Rotationswelle (2);
- eine Laufschiene (12; 12') zum Tragen einer Werkzeugmaschine (13), verschiebbar untergebracht in einem jeweiligen ersten Hohlraum (9; 9'), der im mittigen Körper (3) ausgebildet ist;
- einen Elektromotor (6), der im mittigen Körper (3) untergebracht ist;
- Mittel (21) zur Bewegungsübertragung vom Elektromotor (6) auf die Halterungslaufschiene (12; 12'), ausgelegt, um eine lineare Bewegung der Laufschiene (12; 12') im ersten Hohlraum (9; 9') in eine vorgegebene Richtung (D2) zu erzeugen, die quer zur Rotationsachse (A) der Welle der Werkzeugmaschine angeordnet ist, **dadurch gekennzeichnet, dass** die Rotationswelle (2) zwei Halbwellen (2a, 2b) umfasst, die zueinander ausgerichtet positioniert sind, wobei der rotierbare Werkzeughalterkopf (1) zwischen den Rotationshalbwellen (2a, 2b) eingesetzt ist, und dadurch, dass die Verbindungsmittel (4) jeweilige Nut-Feder-Kupplungen zwischen dem rotierbaren Werkzeughalterkopf (1) und den zwei Halbwellen (2a, 2b) umfassen.

2. Tragbare Werkzeugmaschine nach Anspruch 1, **dadurch gekennzeichnet, dass** die Mittel (21) zur Bewegungsübertragung eine Schrauben-Mutter-Kupplung umfassen.

3. Tragbare Werkzeugmaschine nach Anspruch 2, **dadurch gekennzeichnet, dass** die Mittel (21) zur Bewegungsübertragung eine Antriebswelle (14) umfassen, die mit einem jeweiligen Abschnitt (14b), der ein Außengewinde aufweist, die Schraube der Schrauben-Mutter-Kupplung definiert, und einen Bügel (18), der steif mit der Laufschiene (12), die das Werkzeug (13) trägt, verbunden ist, definierend mit einem jeweiligen Loch mit Innengewinde die Mutter der Schrauben-Mutter-Kupplung, wobei der Gewindeabschnitt (14b) der Antriebswelle (14) durch Verschrauben in das Gewindeloch in Eingriff gelangt.

4. Tragbare Werkzeugmaschine nach Anspruch 3, **dadurch gekennzeichnet, dass** im mittigen Körper (3) ein zweiter Hohlraum (10) ausgebildet ist, um die Antriebswelle (14) unterzubringen, wobei sich der zweite Hohlraum (10) längsseitig parallel zum ersten Hohlraum (9) erstreckt.

5. Tragbare Werkzeugmaschine nach Anspruch 4, **dadurch gekennzeichnet, dass** im mittigen Körper (3) eine Unterteilung (11) für die Verbindung zwischen dem ersten und dem zweiten Hohlraum (9, 10) ausgebildet ist, wobei die Unterteilung (11) ausgestaltet ist, um das Verschieben des Bügels (18) in deren Verbindungsabschnitt mit der Laufschiene (12) zu erlauben.

6. Tragbare Werkzeugmaschine nach Anspruch 2, **dadurch gekennzeichnet, dass** die Mittel (21) zur Bewegungsübertragung eine Antriebswelle (14) umfassen, die mit einem jeweiligen Abschnitt (14b), der ein Außengewinde aufweist, die Schraube der Schrauben-Mutter-Kupplung definiert, wobei die Mutter der Schrauben-Mutter-Kupplung durch ein Loch (F) definiert ist, das mindestens teilweise mit einem Gewinde versehen in der Laufschiene (12') ausgebildet ist, wobei der Gewindeabschnitt (14b) der Antriebswelle (14) durch Verschrauben in das Gewindeloch in Eingriff gelangt.

7. Tragbare Werkzeugmaschine nach einem der Ansprüche 3 bis 6, **dadurch gekennzeichnet, dass** die Mittel (21) zur Bewegungsübertragung eine angetriebene Scheibe (17) umfassen, die an der Antriebswelle (14) ausgebildet ist, und ein Element (20) für die flexible Bewegungsübertragung, ausgestaltet, um betriebswirksam die Scheibe (17) mit einer Welle (6a) des Elektromotors (6) zu verbinden.

## Revendications

1. Machine-outil portable, comprenant un arbre rotatif (2), des moyens motorisés servant à faire tourner l'arbre (2) autour d'un axe respectif, et une tête porte-outil (1) rotative, ladite tête porte-outil (1) rotative comprenant :
- un corps central (3),
- des moyens de raccordement (4) servant à relier le corps central (3) au dit arbre rotatif (2),
- un coulisseau (12 ; 12'), pour supporter une machine-outil (13), logé de façon coulissante dans une première cavité (9 ; 9') respective réalisée dans le corps central (3),
- un moteur électrique (6) logé dans le corps central (3),
- des moyens (21), servant à transmettre le mouvement du moteur électrique (6) au coulisseau de support (12 ; 12'), configurés pour générer un mouvement linéaire du coulisseau (12 ; 12') à l'intérieur de la première cavité (9 ; 9') dans une direction prédéterminée (D2) transversale à l'axe (A) de rotation de l'arbre de la machine-outil, **caractérisée en ce que** l'arbre rotatif (2) comprend deux demi-arbres (2a, 2b) positionnés alignés réciproquement, avec la tête porte-outil (1) rotative étant interposée entre lesdits demi-arbres rotatifs (2a, 2b) et **en ce que** les moyens de raccordement (4) comprennent des accouplements mâle-femelle respectifs entre la tête porte-outil (1) rotative et les deux demi-arbres (2a, 2b).

2. Machine-outil portable selon la revendication 1, **caractérisée en ce que** les moyens (21) servant à transmettre le mouvement comprennent un accouplement à écrou de vis.

3. Machine porte-outil selon la revendication 2, **caractérisée en ce que** les moyens (21) servant à transmettre le mouvement comprennent un arbre fonctionnel (14) définissant, avec une partie (14b) relative étant filetée extérieurement, la vis de l'accouplement à écrou de vis, et un support (18), relié rigidement au coulisseau (12) supportant l'outil (13) et définissant, avec un trou relatif fileté intérieurement, l'écrou de l'accouplement à écrou de vis, la partie filetée (14b) de l'arbre fonctionnel (14) se mettant en prise par vissage à l'intérieur du trou fileté.

4. Machine porte-outil selon la revendication 3, **caractérisée en ce que** dans le corps central (3), une seconde cavité (10) est réalisée pour loger l'arbre fonctionnel (14), la seconde cavité (10) se prolongeant longitudinalement de façon parallèle à la première cavité (9).

5. Machine-outil portable selon la revendication 4, **caractérisée en ce que** dans le corps central (3), un compartiment (11) est réalisé pour raccorder les première et seconde cavités (9, 10), le compartiment (11) étant conçu pour permettre le coulissement du support (18), dans sa partie de raccordement au coulisseau (12).

6. Machine porte-outil selon la revendication 2, **caractérisée en ce que** les moyens (21) servant à transmettre le mouvement comprennent un arbre fonctionnel (14) définissant, avec une partie (14b) relative étant filetée extérieurement, la vis de l'accouplement à écrou de vis, l'écrou de l'accouplement à écrou de vis étant défini par un trou (F) au moins partiellement fileté réalisé dans le coulisseau (12'), la partie filetée (14b) de l'arbre fonctionnel (14) se mettant en prise par vissage à l'intérieur du trou fileté.

7. Machine-outil portable selon l'une quelconque des revendications de 3 à 6, **caractérisée en ce que** les moyens (21) servant à transmettre le mouvement comprennent une poulie réceptrice (17) réalisée sur l'arbre fonctionnel (14) et un élément (20), pour la transmission flexible du mouvement, conçu pour relier fonctionnellement la poulie (17) à un arbre (6a) du moteur électrique (6).
